# EUROPÄISCHE PATENTANMELDUNG

(11) **EP 3 627 341 A1**
(43) Veröffentlichungstag der Anmeldung: **25.03.2020**
(21) Anmeldenummer: 19198524.1
(22) Anmeldetag: 20.09.2019
(51) Int. Cl.: G06F 16/00

(54) **VERFAHREN UND ANORDNUNG ZUR HERSTELLUNG, ÜBERTRAGUNG UND ANZEIGE EINES INDIVIDUALISIERTEN IDEOGRAMMS**

(30) Priorität: 21.09.2018 DE 102018123297
(71) Anmelder: Grahl, Thomas, 92318 Neumarkt (DE)
(72) Erfinder: Grahl, Thomas, 92318 Neumarkt (DE)
(74) Vertreter: Heinze, Ekkehard

(57) **Zusammenfassung**

Verfahren zur Herstellung eines individualisierten Ideogramms, wobei ein gemäß einer Standard-Codierungsnorm vor-codiertes Basis-Ideogramm mit einer Bild- oder Videodatei und/oder einer Audio-Datei überlagert wird und die resultierende Superpositions-Datei aufgrund der Standard-Codierungsnorm oder einer hieraus abgeleiteten Sonder-Codierungsnorm für eine internet-basierte Übertragung und eine visuelle oder kombinierte visuell-akustische Anzeige codiert wird.

## Beschreibung

Die Erfindung betrifft ein Verfahren zur Herstellung eines individualisierten Ideogramms (nachfolgend auch bezeichnet als "Sonder-Emoji"), ein hierauf aufbauendes Verfahren zur Herstellung, Übertragung und Anzeige eines solchen Ideogramms sowie schließlich eine Anordnung zur Durchführung eines solchen Verfahrens.

Ideogramme oder Bildschriftzeichen, umgangssprachlich bekannt als "Emojis", sind seit Jahren aus der elektronischen Kommunikation, insbesondere aus Textnachrichten, die im Rahmen einer Kommunikationsapplikation erstellt und versandt werden, nicht mehr wegzudenken. Der für die Nutzer verfügbare Zeichenvorrat wurde in den letzten Jahren stetig erweitert und liegt heute, je nach Nutzerendgerät, zwischen einigen 100 und weit mehr als 1000 Zeichen. Nachfolgend ist der Begriff "Ideogramm" im Sinne der vorhandenen Zeichen breit zu verstehen und schließt Emoticons und sonstige Piktogramme, etwa von Körperteilen, Gegenständen, Pflanzen, Tieren, landschaftlichen und Wetter-Situationen etc., ein.

Die Verwendung von Ideogrammen in der elektronischen Kommunikation erfordert selbstverständlich eine Normungs-Grundlage, damit die Übertragung und Anzeige gelingen kann. Während in den Anfängen, wie etwa bei den von DoCoMo im Rahmen des I-Mode-Projekts entwickelten Emojis, firmenspezifische Normen angewandt und von einer Gruppe von Telefongesellschaften als gültig vereinbart wurden, haben sich später herstellerübergreifend einheitliche Codierungen etabliert, die nachfolgend als Standard-Codierung bezeichnet werden. Insbesondere wurde mit der Aufnahme der Ideogramme in das Unicode-System die Grundlage für eine weltweit einheitliche Codierung geschaffen, die aktuell gültig ist.

Der Erfindung liegt die Aufgabe zugrunde, ein Verfahren und eine Anordnung anzugeben, mit denen die Einsatz- und Wirkungsmöglichkeiten von Ideogrammen weiter vergrößert und damit ihre Attraktivität für die Nutzer der elektronischen Kommunikation erhöht werden kann.

Diese Aufgabe wird in ihren Verfahrensaspekten durch ein Verfahren mit den Merkmalen des Anspruchs 1 und, hiervon abgeleitet, durch ein Verfahren mit den Merkmalen des Anspruchs 6, und in ihrem Vorrichtungsaspekt durch eine Anordnung mit den Merkmalen des Anspruchs 12 gelöst. Zweckmäßige Fortbildungen des Erfindungsgedankens sind Gegenstand der abhängigen Ansprüche.

Die Erfindung schließt den Gedanken ein, den bisher trotz der immer größer werdenden Vielzahl von Ideogrammen beschränkten Einsatz- und Wirkungsbereich durch eine vom Nutzer selbst vorgenommene Individualisierung drastisch zu erweitern. Dies stellt auch insofern einen Quantensprung für die Anwendung von Ideogrammen dar, als damit ihr von vielen Nutzern als etwas störend empfundener "standardisierter" beziehungsweise "genormter" Charakter überwunden wird und sie vom Empfänger als wirklich persönliche Botschaft des Senders empfunden werden. Unter "Individualisierung" wird hierbei einerseits eine Verknüpfung mit persönlichen (privaten) Daten des Nutzers, andererseits aber auch eine von dieser individuell vorgenommenen Verknüpfung mit öffentlich zugänglichen Bildern, Videos oder auch Audiodateien verstanden.

In einem technisch grundsätzlichen Sinne sieht das vorgeschlagene Verfahren vor, dass ein gemäß einer Standard-Codierungsnorm vor-codiertes Basis-Ideogramm mit einer Bild- oder Videodatei oder einer Audio-Datei überlagert wird und die resultierende Superpositions-Datei aufgrund der Standard-Codierungsnorm oder einer hieraus abgeleiteten Sonder-Codierungsnorm für eine internet-basierte Übertragung und eine visuelle oder kombinierte visuell-akustische Anzeige codiert wird.

Die Erfindung sieht also vor, dass, verknüpft mit der einheitlich standardisierten Codierung, eigene individuelle Sonder-Emojis insbesondere, aber nicht nur, in Form von bildlichen fotografischen Darstellungen oder Videos generiert werden können. Darüber hinaus könnten auch Audiodateien mit den Standard-Emoji-Codes verknüpft werden oder eine audiovisuelle Kombination von Darstellungen erfolgen.

Dabei sieht eine computergestützte Ausgestaltung so aus, dass ein bereits vom Betriebssystem angebotenes Standard-Emoji angewählt und die dazugehörige bildliche Darstellung damit verknüpft wird. Diese bildliche Darstellung kann auch ein sogenanntes "Selfie" sein, das vor oder während des Vorganges der vorstehend genannten Verknüpfung aufgenommen wurde.

Die Verknüpfung mit den einheitlich standardisierten Emojis ist eine günstige Ausprägung der Idee, aber nicht zwingend erforderlich. Alternativ ließen sich auch Sonder-Emojis ohne Zuordnung zu den Emoji-Codes ablegen und verarbeiten.

Eine weitere Ausprägung besteht darin, dass kommerziell angebotene bildliche Darstellungen mit der entsprechenden Emoji-Codierung verknüpft werden. Hier ließen sich je nach Geschmack Bilder(serien) von Prominenten oder auch z.B. Tieren, wie Hunden, Katzen oder Pferden, hinterlegen.

Auch kann man, je nach aktueller Nachrichtenlage, sei es von Celebrities aus dem Showgeschäft, Sportlern oder Politikern, bestimmte Emojis mit den Darstellungen dieser Personen des öffentlichen Lebens verknüpfen, die für eine Zeit en-vogue sind und den Sinn des Emojis besonders prägnant darstellen.

Insofern setzt eine softwaretechnische Lösung voraus, dass diese Sonder-Emojis schnell und einfach den Standard-Emoji-Codes zugeordnet werden können. Dabei könnte auch der Ausschnitt eines Bildes durch z.B. Anklicken oder Antippen in ein Sonder-Emoji umgewandelt werden.

In einer Ausführung der Erfindung wird das Basis-Ideogramm aus einem Basisideogrammspeicher in eine dedizierte App, in der die relevante Codierungsnorm implementiert ist, geladen oder aus einer Kommunikationsapplikation in die dedizierte App kopiert und in dieser mit der Bild- oder Videodatei und/oder Audio-Datei überlagert und codiert, und die codierte Superpositions-Datei wird in einem Sonderideogrammspeicher gespeichert und/oder in die Kommunikationsapplikation übernommen.

In einer alternativen Ausführung wird ein in der Kommunikationsapplikation erstellter Nachrichten-Entwurf insgesamt in eine dedizierte App, in der die relevante Codierungsnorm implementiert ist, geladen, und es wird mindestens ein darin enthaltenes Basis-Ideogramm in der dedizierten App mit der Bild- oder Videodatei und/oder Audio-Datei überlagert und codiert, und anschließend wird das durch die codierte Superpositions-Datei repräsentierte individualisierte Ideogramm zur Ersetzung des Basis-Ideogramms in den Nachrichtenentwurf zurück geladen.

In den weitaus meisten Anwendungen wird es sich bei der Kommunikationsapplikation um ein E-Mail-Programm oder einen Messenger-Dienst wie z.B. SMS oder WhatsApp handeln. In der Regel werden die erfindungsgemäßen individualisierten Ideogramme in eine Textnachricht eingebunden sein, sie können aber auch - einzeln oder in Gruppen - den ausschließlichen Inhalt einer textfreien Nachricht bilden und auch in anderen als den genannten Anwendungen erstellt, versandt und dargestellt werden.

In derzeit aktuellen Ausführungen handelt es sich bei der Standard-Codierungsnorm um Unicode 6.3 oder Unicode 7.0 oder eine Weiterentwicklung dieser.

Bei einem Verfahren zur Herstellung, Übertragung und Anzeige eines individualisierten Ideogramms wird dieses auf einem ersten Nutzerendgerät hergestellt, in einer Kommunikationsapplikation zu einem zweiten Nutzerendgerät übertragen und die dem individualisierten Ideogramm zugrundeliegende codierte Superpositions-Datei auf dem zweiten Nutzerendgerät aufgrund der bei ihrer Herstellung angewandten Codierungsnorm decodiert und die decodierte Superpositions-Datei visuell oder kombiniert visuell-akustisch auf dem zweiten Nutzerendgerät angezeigt.

In aus diesseitiger Sicht wichtigen Realisierungen dieses Verfahrens ist auf dem ersten und zweiten Nutzerendgerät eine dedizierte App zur Superposition eines Basis-Ideogramms mit einer Bild- oder Videodatei und/oder einer Audio-Datei und zur Codierung der Superpositions-Datei gemäß einer für das Basis-Ideogramm geltenden Standard-Codierungsnorm oder einer hieraus abgeleiteten Sonder-Codierungsnorm implementiert.

Durch die individualisierte und detailliertere Darstellung dieser Sonder-Emojis, wäre die Lesbarkeit in der Regel nicht mehr gewährleistet, sofern diese Sonder-Emojis in einer vergleichbaren Größe wie die Emojis nach dem Stand der Technik gehalten würden. Standard-Emojis, statische aber auch animierte Emojis, nach dem Stand der Technik sind Piktogramme, welche auch in vergleichsweise kleiner Darstellung auf dem Bildschirm erkannt werden können. Um diesem Problem zu begegnen, sollen die Sonder-Emojis temporär vergrößert dargestellt werden. Diese temporäre Vergrößerung (Zoom) kann:
- Beim Antippen / Anklicken des Sonder-Emojis erfolgen
- Die vergrößerte Darstellung (Aufzoomen) kann langsam verzögert oder unmittelbar dargestellt werden
- Die Sonder-Emojis können automatisch erscheinen, wenn die Nachricht oder Mail aufgerufen wird. Als internes Signal für das Aufrufen des Sonder-Emojis kann eine sinnvolle Lesegeschwindigkeit angenommen werden, so dass im Text befindliche Sonder-Emojis sukzessive vergrößert und wieder verkleinert werden.
- Zukünftig kann man sich Iris-Scanner vorstellen die erkennen, an welcher Stelle auf dem Bildschirm gelesen wird, so dass beim Blick auf das Sonder-Emoji dieses automatisch vergrößert wird.
- Das sukzessive Aufzoomen und Verkleinern könnte auch je nach Neigungswinkel des Bildschirms oder beim ruckartigen Schütteln des, in der Regel, mobilen Endgerätes wie Smartphone oder Tablet erfolgen.

Eine Anordnung zur Durchführung des erfindungsgemäßen Verfahrens umfasst zunächst - was die Herstellung des individualisierten Ideogramms angeht - mindestens ein Nutzerendgerät, etwa ein Smartphone oder Tablet oder einen Laptop, mit Verarbeitungsmitteln zur Überlagerung eines gemäß einer Standard-Codierungsnorm vor-Basis Ideogramms mit einer Bild- oder Videodatei und- einer Audiodatei und zur Codierung der resultierenden Superpositions-Datei aufgrund der Standard-Codierungsnorm oder einer hieraus abgeleiteten Sonder-Codierungsnorm.

In einer Ausführung kann das Nutzerendgerät ein Standard-Betriebssystem aufweisen, wobei die Verarbeitungsmittel in einer im Nutzerendgerät installierte App implementiert sind. In künftigen Betriebssystemen können aber die benötigten Verarbeitungsmittel auch unmittelbar im Betriebssystem implementiert sein, sodass die Installation einer dedizierten App nicht mehr erforderlich sein wird.

Soweit die erfindungsgemäße Anordnung zur Übertragung des individualisierten Ideogramms zu einem weiteren Gerät ausgebildet ist (was natürlich den eigentlichen Nutzen der Erfindung erbringt), umfasst sie weiterhin ein zweites Nutzerendgerät mit zweiten Verarbeitungsmitteln zur Decodierung der im ersten Nutzerendgerät erzeugten Superpositions-Datei aufgrund der Standard-Codierungsnorm oder hieraus abgeleiteten Sonder-Codierungsnorm und zur Aufbereitung für eine visuelle oder kombiniert visuell- akustische Anzeige, sowie einen Kommunikationskanal zwischen dem ersten und zweiten Nutzerendgerät, der zur Übertragung der Superpositions-Datei, insbesondere eingebettet in eine Nachricht innerhalb einer Kommunikationsapplikation, ausgebildet ist.

Wie oben für das "Hersteller"-Nutzerendgerät erwähnt, kann auch das Empfänger-Gerät das zweite Nutzerendgerät ein Standard-Betriebssystem aufweisen, wobei die zweiten Verarbeitungsmittel in einer im zweiten Nutzerendgerät installierten App implementiert sind. Auch für die empfängerseitigen Verarbeitungsfunktionen ist aber künftig die Implementierung in den Betriebssystemen denkbar und sinnvoll.

In der anhängenden Figur ist ein beispielhafter Ablauf des erfindungsgemäßen Verfahrens skizzenhaft dargestellt.

Die Ausführung der Erfindung ist aber nicht auf dieses Verfahren und die oben hervorgehobenen Aspekte beschränkt, sondern im Rahmen der anhängenden Ansprüche in einer Vielzahl von weiteren Ausgestaltungen möglich.

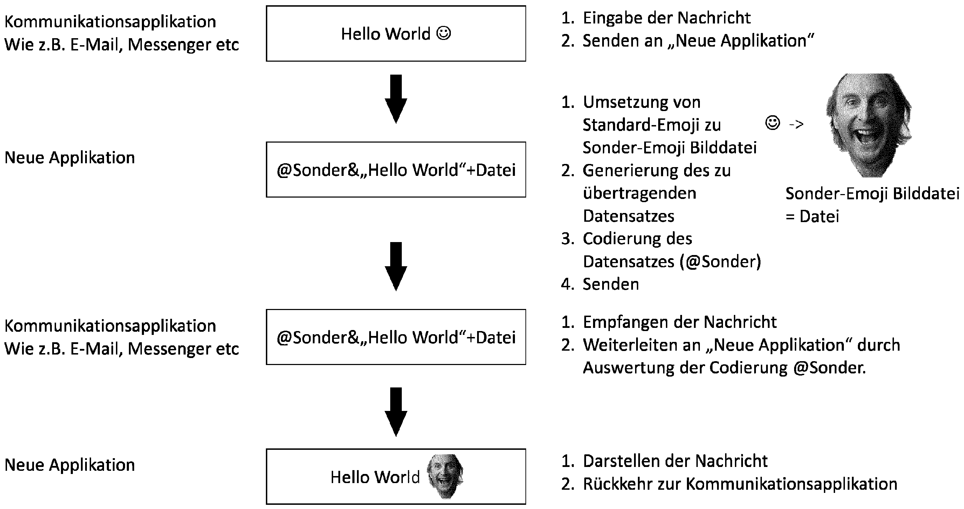

## Patentansprüche

1. Verfahren zur Herstellung eines individualisierten Ideogramms, wobei ein gemäß einer Standard-Codierungsnorm vor-codiertes Basis-Ideogramm mit einer Bild- oder Videodatei und/oder einer Audio-Datei überlagert wird und die resultierende Superpositions-Datei aufgrund der Standard-Codierungsnorm oder einer hieraus abgeleiteten Sonder-Codierungsnorm für eine internet-basierte Übertragung und eine visuelle oder kombinierte visuell-akustische Anzeige codiert wird.

2. Verfahren nach Anspruch 1, wobei das Basis-Ideogramm aus einem Basisideogrammspeicher in eine dedizierte App, in der die relevante Codierungsnorm implementiert ist, geladen oder aus einer Kommunikationsapplikation in die dedizierte App kopiert und in dieser mit der Bild- oder Videodatei und/oder Audio-Datei überlagert und codiert wird und die codierte Superpositions-Datei in einem Sonderideogrammspeicher gespeichert und/oder in die Kommunikationsapplikation übernommen wird.

3. Verfahren nach Anspruch 1, wobei ein in der Kommunikationsapplikation erstellter Nachrichten-Entwurf insgesamt in eine dedizierte App, in der die relevante Codierungsnorm implementiert ist, geladen wird und mindestens ein darin enthaltenes Basis-Ideogramm in der dedizierten App mit der Bild- oder Videodatei und/oder Audio-Datei überlagert und codiert wird und anschließend das durch die codierte Superpositions-Datei repräsentierte individualisierte Ideogramm zur Ersetzung des Basis-Ideogramms in den Nachrichtenentwurf zurückgeladen wird.

4. Verfahren nach Anspruch 2 oder 3, wobei es sich bei der Kommunikationsapplikation um ein E-Mail-Programm oder einen Messenger-Dienst wie SMS oder WhatsApp handelt.

5. Verfahren nach einer der vorangehenden Ansprüche, wobei es sich bei der Standard-Codierungsnorm um Unicode 6.3 oder Unicode 7.0 oder eine Weiterentwicklung dieser handelt.

6. Verfahren zur Herstellung, Übertragung und Anzeige eines individualisierten Ideogramms, wobei das individualisierte Ideogramm gemäß dem Verfahren nach einem der vorangehenden Ansprüche auf einem ersten Nutzerendgerät hergestellt,
in einer Kommunikationsapplikation zu einem zweiten Nutzerendgerät übertragen und die dem individualisierten Ideogramm zugrundeliegende codierte Superpositions-Datei auf dem zweiten Nutzerendgerät aufgrund der bei ihrer Herstellung angewandten Codierungsnorm decodiert und die decodierte Superpositions-Datei visuell oder kombiniert visuell-akustisch auf dem zweiten Nutzerendgerät angezeigt wird.

7. Verfahren nach Anspruch 6, wobei das individualisierte Ideogramm eingebettet in eine Textnachricht vom ersten zum zweiten Nutzerendgerät übertragen und auf dem zweiten Nutzerendgerät angezeigt wird.

8. Verfahren nach Anspruch 6 oder 7, wobei auf dem ersten und zweiten Nutzerendgerät eine dedizierte App zur Superposition eines Basis-Ideogramms mit einer Bild- oder Videodatei und/oder einer Audio-Datei und zur Codierung der Superpositions-Datei gemäß einer für das Basis-Ideogramm geltenden Standard-Codierungsnorm oder einer hieraus abgeleiteten Sonder-Codierungsnorm implementiert ist.

9. Verfahren nach einem der Ansprüche 6 bis 8, wobei es sich bei der Kommunikationsapplikation um ein E-Mail-Programm oder eines Messenger-Dienst wie SMS oder WhatsApp handelt.

10. Verfahren nach einem der Ansprüche 6 bis 9, wobei das übertragene individualisierte Ideogramm mittels einer dedizierten Zoom-Funktion wahlweise temporär vergrößert dargestellt wird, wobei eine Adressierung des Ideogramms durch Antippen/anklicken oder Blick-fokussierung auf dieses erfolgt.

11. Verfahren nach einem der Ansprüche 6 bis 9, wobei ein übertragenes individualisiertes Ideogramm automatisch bei Anzeige der Nachricht auf dem zweiten Nutzerendgerät einer dedizierten Zoom-Funktion temporär vergrößert dargestellt wird.

12. Anordnung zur Durchführung des Verfahrens nach einem der vorangehenden Ansprüche, umfassend ein Nutzerendgerät mit Verarbeitungsmitteln zur Überlagerung eines gemäß einer Standard-Codierungsnorm vor-codierten Basis Ideogramms mit einer Bild- oder Videodatei und- einer Audiodatei und zur Codierung der resultierenden Superpositions-Datei aufgrund der Standard-Codierungsnorm oder einer hieraus abgeleiteten Sonder-Codierungsnorm.

13. Anordnung nach Anspruch 1, wobei das Nutzerendgerät ein Standard-Betriebssystem aufweist und die Verarbeitungsmittel in einer im Nutzerendgerät installierten App implementiert sind, oder die Verarbeitungsmittel im Betriebssystem implementiert sind.

14. Anordnung nach Anspruch 12 oder 13, ausgebildet zur Übertragung und entfernten Anzeige des individualisierten Ideogramms, weiter umfassend ein zweites Nutzerendgerät mit zweiten Verarbeitungsmitteln zur Decodierung der im ersten Nutzerendgerät erzeugten Superpositions-Datei aufgrund der Standard-Codierungsnorm oder hieraus abgeleiteten Sonder-Codierungsnorm und zur Aufbereitung für eine visuelle oder kombiniert visuell- akustische Anzeige, und weiter aufweisend einen Kommunikationskanal zwischen dem ersten und zweiten Nutzerendgerät, der zur Übertragung der Superpositions-Datei, insbesondere eingebettet in eine Nachricht innerhalb einer Kommunikationsapplikation, ausgebildet ist.

15. Anordnung nach Anspruch 14, wobei das zweite Nutzerendgerät ein Standard-Betriebssystem aufweist und die zweiten Verarbeitungsmittel in einer im zweiten Nutzerendgerät installierten App implementiert sind, oder die zweiten Verarbeitungsmittel im Betriebssystem implementiert sind.
